# EUROPEAN PATENT SPECIFICATION

(11) **EP 2 450 206 B1**
(45) Date of publication and mention of the grant of the patent: **01.10.2014**
(21) Application number: 10794084.3
(22) Date of filing: 25.06.2010
(51) Int. Cl.: B60J 3/00, E06B 9/40, E06B 9/58

(54) **SHADE DEVICE**
SCHATTENVORRICHTUNG
DISPOSITIF DE STORE

(30) Priority: 29.06.2009 JP 2009153371
(43) Date of publication of application: 09.05.2012
(73) Proprietor: Ashimori Industry Co., Ltd., Osaka-shi Osaka 550-0014 (JP)
(72) Inventor: OJIMA, Shinya, Settsu-shi Osaka 566-0001 (JP); TANAKURA, Masataka, Settsu-shi Osaka 566-0001 (JP)
(74) Representative: Kilian Kilian & Partner
(86) International application number: PCT/JP2010/060879
(87) International publication number: WO 2011/001915

(56) References cited:
- JP-A- 2002 225 566
- JP-A- 2002 225 566
- US-A- 4 758 041
- US-A- 6 086 133
- US-A- 6 086 133

## Description

### Technical Field

The present invention relates to a shade device in which a leading edge of a shade that is drawn and housed is guided along guide rails.

### Background Art

Patent Document 1 describes the technology related to a shade device in which a leading edge of a shade is guided along guide rails. Disclosed in Patent Document 1 is the shade device (window shade) including a pair of guide rails that guide both ends of a stay (traction rod) attached to the drawing-side edge of the shade (shade seat) for extending and housing the shade. Each guide rail is divided into a proximal-side rail (fist portion) that supports the stay in the state in which the shade is housed and an extension-side rail (second portion) that supports the stay when the shade is extended. This allows the entire shade device to be compact and have a configuration so as to improve the transport efficiency. The shade device configured as described above is attached to a vehicle by connecting the extension-side rail to the proximal-side rail immediately before being attached to the vehicle.

### Prior Art Document

### Patent Document

Patent Document 1: Japanese Patent Application Laid-Open No. 2002-225566

### Summary of the Invention

### Problems to be Solved by the Invention

Unfortunately, there is a fear in the configuration as described in Patent Document 1 that in a case where the shade device is attached to a vehicle, a step or bending may be generated between the extension-side rail and the proximal-side rail due to an assembly error when both rails are connected to each other. This may increase the friction occurring when the runner that is connected to the stay and moves in the guide rail crosses over the step and may increase the sliding friction between the runner and the interior wall of the guide rail, leading to abnormal noise. Further, in the case where the runner is slidably driven by a motor, the load applied to the motor may increase, and the motor may fail to operate due to deterioration of durability.

Therefore, an object of the present invention is to enable a shade to be smoothly drawn and housed and transported in a compact manner.
This object is achieved by a shade device according to claim 1. Further advantageous embodiments of the invention are the subject-matter of the dependent claims. Aspects of the invention are set out below. Means to Solve the Problems

A shade device according to a first aspect is configured to shield a window, including: a windup device; a shade attached to the windup device so as to be drawn therefrom and housed therein; a stay attached to a drawing-side edge of the shade; a pair of runners respectively connected to both ends of the stay via first connecting parts; and a pair of guide rails respectively supporting the pair of runners in a movable manner, wherein the first connecting part connects the stay and each of the runners so as to rotate relative to each other such that each of the guide rails is folded in a direction to approach the windup device.

According to a second aspect, in the shade device according to the first aspect, in a drawing/housing direction of the shade, a distance between the windup device and a rotation axis of one of the first connecting parts is set to be different from a distance between the windup device and a rotation axis of the other of the first connecting parts.

According to a third aspect, in the shade device according to the first aspect, the windup device and each of the guide rails are connected so as to rotate relative to each other via a second connecting part, and a rotation axis of the first connecting part approximately coincides with a rotation axis of the second connecting part in a state in which the shade is housed in the windup device.

According to a fourth aspect, in the shade device according to the third aspect, the second connecting part connects, in a state in which at least the pair of guide rails are extended, the windup device and the pair of guide rails so as to adjust a position of each of the guide rails with respect to the windup device in a longitudinal direction of the windup device.

According to a fifth aspect, in the shade device according to the first aspect, the stay includes a support member attached to a drawing-side edge of the shade, and a pair of slide members each having one end supported by the support member so as to move along a longitudinal direction thereof and the other end connected to each of the runners via the first connecting part so as to rotate relative thereto.

According to a sixth aspect, the shade device according to the first aspect further includes a stopper configured to regulate the rotation of the pair of guide rails in the extending direction in a state in which the pair of guide rails are extended.

According to a seventh aspect, the shade device according to the first aspect further includes a holding member configured to hold the pair of guide rails in a folded manner.

According to an eighth aspect, the shade device according to the first aspect further includes: a flexible linear member disposed along each of the guide rails and connected to each of the runners; and a drive device moving the flexible linear member along a longitudinal direction of the pair of guide rails.

### Effects of the Invention

According to the shade device of the first aspect, the stay and the runners are connected so as to rotate relative to each other, and thus the guide rails can be extended and folded in the state in which the runners are movably supported by the guide rails. Then, one runner can be supported by one guide rail, which allows the runners to move smoothly. In addition, a package size can be made smaller by folding the guide rails. That is, it is possible to smoothly draw or house the shade, which enables compact transportation.

According to the shade device of the second aspect, a pair of guide rails can be folded so as to be overlapped each other in a parallel manner when the guide rails are folded. Accordingly, a folded state can be made compact even in a case where the length of the pair of guide rails in the longitudinal direction is larger than approximately a half length of the windup device in the longitudinal direction. Further, in a case of using a shade in which a drawing-side edge is tilted with respect to the windup device in accordance with a window shape, such as a case where a shade is applied to an odd-shaped window, a pair of guide rails can be folded, which allows compact transportation.

According to the shade device of the third aspect, the windup device and the guide rails are connected to each other, and thus it is possible to reduce the load applied to the first connecting part. In addition, the modes when the guide rails are folded and extended are nearly even, which enables easy packing and improves accuracy in attachment to a vehicle. Further, the rotation axis of the first connecting part is made to coincide with the rotation axis of the second connecting part, which allows the guide rails to be smoothly folded.

According to the shade device of the fourth aspect, the assembly width dimension when the guide rails are extended can be adjusted in the attachment to a vehicle, whereby it is possible to accommodate a product error or a dimensional error of an attachment position.

According to the shade device of the fifth aspect, even in a case where the distance between a pair of guide rails varies in the longitudinal direction of the guide rails or in a case where the distance between a pair of guide rails varies when or after the shade device is attached to a vehicle, it is possible to smoothly draw or house the shade correspondingly to the distance change. Further, even when a pair of guide rails are folded in the state in which the rotation axis of the first connecting part does not approximately coincide with the rotation axis of the second connecting part, the slide member slides with respect to the support member in accordance with the rotation of the pair of guide rails. This allows the guide rails to be folded and reduces the loads applied to the stay and the runners.

According to the shade device of the sixth aspect, it is possible to prevent the guide rails from being extended excessively when the shade device is attached to the vehicle, which limits damages to the slide members and the runners. In addition, it is possible to limit scratches or damages to a vehicle body due to the guide rails coming into contact with a vehicle.

According to the shade device of the seventh aspect, it is possible to suppress the guide rails from rattling during transportation, which limits damages to the shade device.

According to the shade device of the eighth aspect, the runners can be moved and stopped at appropriate positions via a flexible linear member that can be automatically moved by the drive device, whereby it is possible to automatically move the shade to a desired position for use. In addition, one runner is movably supported by one guide rail and is moved smoothly, whereby it is possible to prevent the application of an excessive load to the drive device, which prevents deterioration of durability.

### Brief Description of Drawings

FIG. 1 is a view showing a shade device when guide rails are extended.
FIG. 2 is a view showing the shade device when the guide rails are folded.
FIG. 3 is an enlarged plan view showing a vicinity of a first connecting part and a second connecting part,
FIG. 4 is a plan view showing the structure of a stay.
FIG. 5 is a diagram showing the relationship between a runner and the guide rail in a cross-sectional view taken along the line V-V of FIG. 3.
FIG. 6 is a cross-sectional view taken along the line VI-VI of FIG. 3.
FIG. 7 is a perspective view showing the vicinity of the first connecting part and the second connecting part when the guide rails are folded.
FIG. 8 is a conceptual diagram of a movement of a wire by a drive device.
FIG. 9 is a view showing a shade device when guide rails are extended according to a first modification.
FIG. 10 is a view showing the shade device when the guide rails are folded according to the first modification.
FIG. 11 is a view showing a shade device when guide rails are extended according to a second modification.
FIG. 12 is a view showing the shade device when the guide rails are folded according to the second modification.

### Embodiments for Carrying Out the Invention

A shade device according to the present embodiment is described below. This shade device is a device that shields a window, a sunshine roof or the like of a vehicle by means of a shade at a position on an inner side of the vehicle. Description is given below by taking an example in which the shade device is applied to a vehicle window. The shade device includes a pair of guide rails that guide an operation for drawing and housing a shade and is configured to transport these guide rails in a state of being folded in a compact manner. The folded guide rails are extended and then attached to a vehicle after being transported, which allows the shade to be smoothly drawn and housed.

### <1. Configuration of shade device>

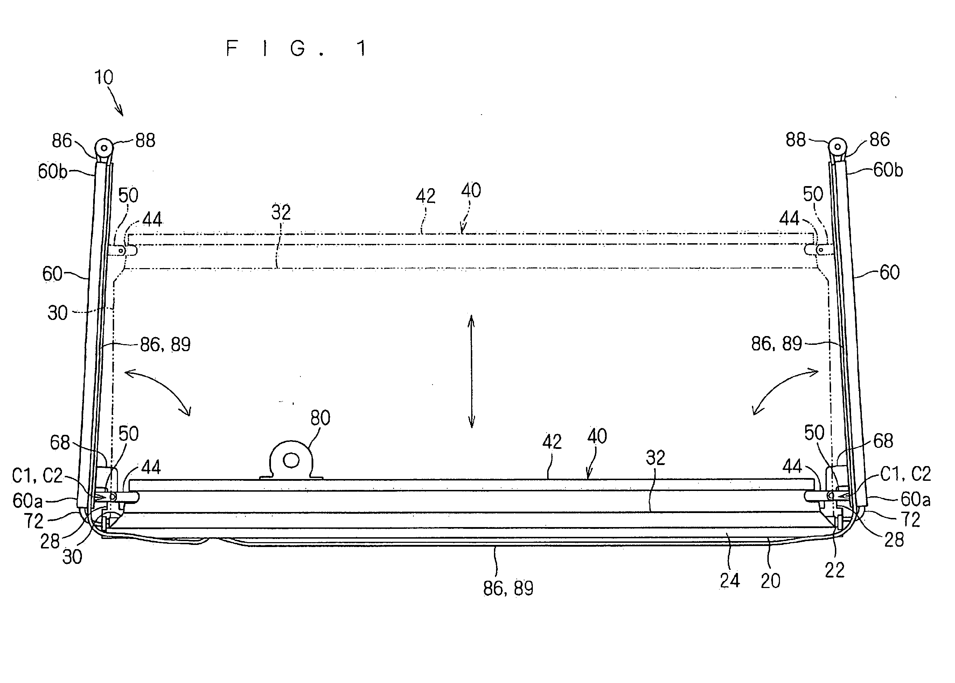

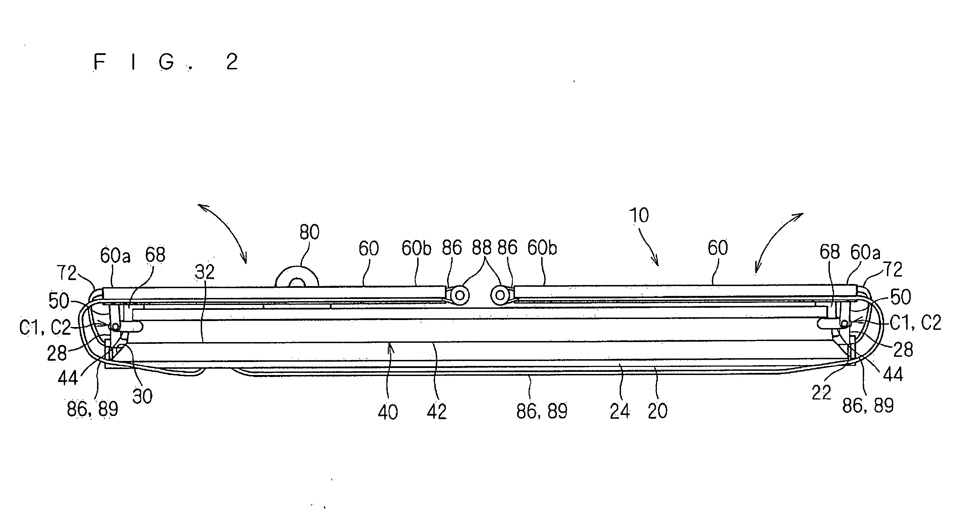

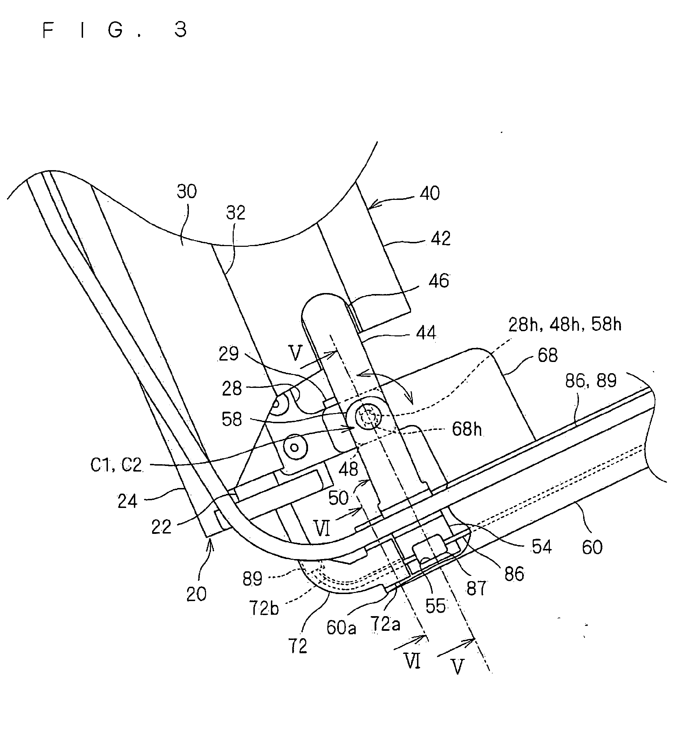

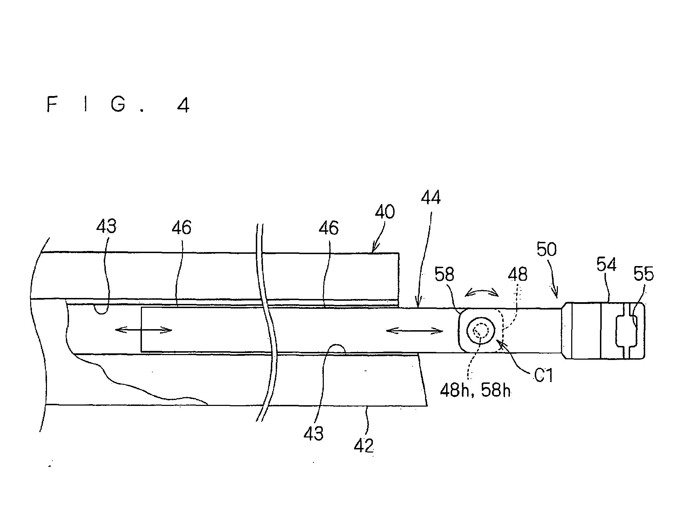

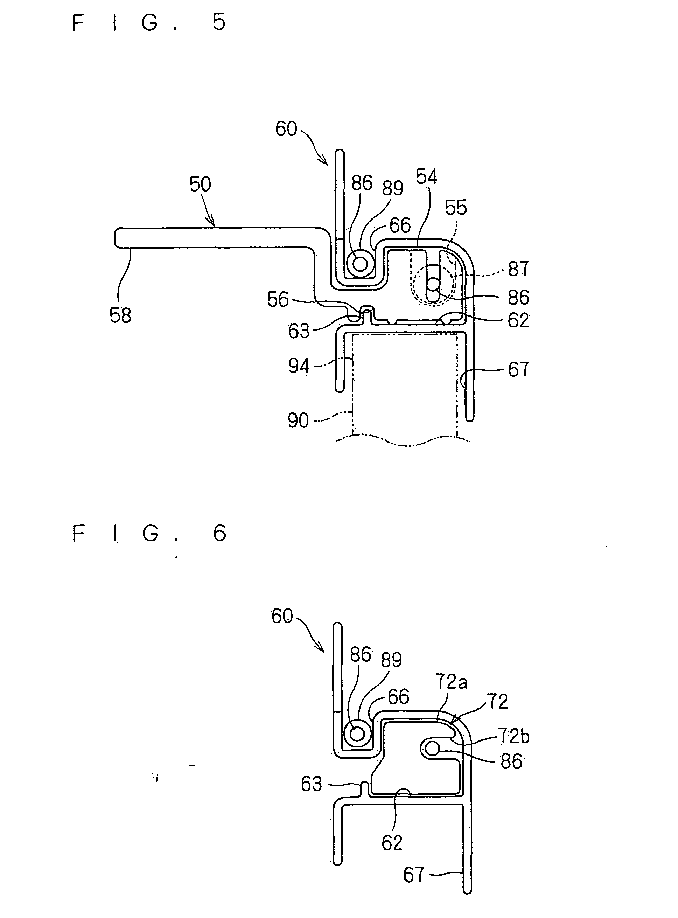

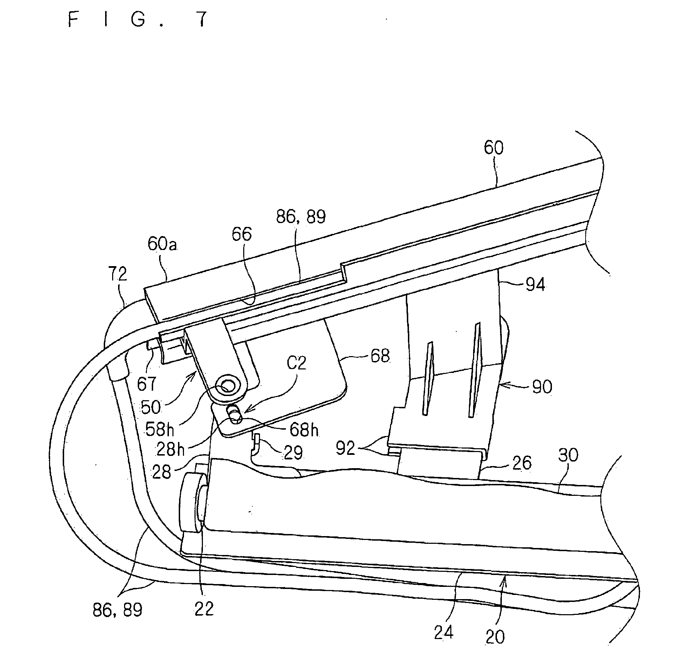

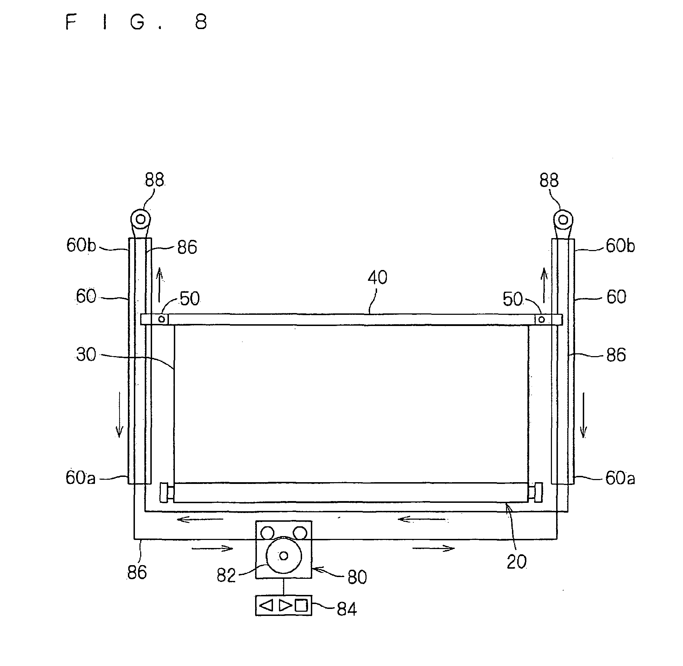

The configuration of the shade device is described. FIG. 1 is a view showing a shade device 10 when guide rails 60 are extended, FIG. 2 is a view showing the shade device 10 when the guide rails 60 are folded, FIG. 3 is an enlarged plan view of the vicinity of a first connecting part C1 and a second connecting part C2, FIG. 4 is a view showing the structure of a stay 40, FIG. 5 is a diagram showing the relationship between a runner 50 and the guide rail 60 in a cross-sectional view taken along the line V-V of FIG. 3, FIG. 6 is a cross-sectional view taken along the line VI-VI of FIG. 3, FIG. 7 is a perspective view of the vicinity of the first connecting part C1 and the second connecting part C2 when the guide rails 60 are folded, and FIG. 8 is a conceptual diagram of a movement of a wire 86 by a drive device 80.

The shade device 10 includes a windup device 20, a shade 30, the stay 40, a pair of runners 50 and a pair of guide rails 60. In this shade device 10, the stay 40 for drawing is attached to the shade 30 that can be drawn from and housed in the windup device 20, and the stay 40 is connected to the pair of runners 50 so as to rotate relative thereto. The pair of runners 50 are respectively supported by the pair of guide rails 60 in a movable manner, and the pair of guide rails 60 are connected to the windup device 20 so as to rotate relative thereto. The pair or runners 50 move along the pair of guide rails 60, whereby the shade 30 is drawn and housed. The pair of guide rails 60 are configured so as to be folded via the respective connecting parts in a state in which the pair of runners 50 are supported by the pair of guide rails 60 when the shade 30 is housed.

The windup device 20 includes a windup shaft 22 and a windup support member 24. The windup shaft 22 is supported by the windup support member 24 so as to rotate relative thereto about a central axis thereof, and is rotatively biased by a biasing member (not shown). Further, the windup support member 24 includes a windup-support-member-side connecting piece 28 capable of connecting the pair of guide rails 60 and two holding pieces 26 to which a holding member 90 described below can be attached. The windup-support-member-side connecting piece 28 and the holding piece 26 are described below in detail.

The shade 30 is a sheet-like member formed by, for example, cutting and sewing the material such as cloth in accordance with the shape, size and the like of a window of a target vehicle to which the shade 30 is attached. The shade 30 may be formed with fabric materials having light-blocking property and capable of shielding a vehicle window. In this case, the shade 30 is formed in an approximately rectangular shape, and one-edge-side portion thereof (drawing-side edge 32 described below) is formed to be narrower than other portions. Needless to say, the shape of the shade 30 is not limited thereto and, for example, may be trapezoidal.

The shade 30 is attached to the windup device 20 so as to be drawn therefrom and housed therein, and is drawn and housed in the direction approximately perpendicular to the longitudinal direction of the windup device 20. More specifically, one edge of the shade 30 is attached to the outer peripheral surface of the windup shaft 22 of the windup device 20 so as to extend along the axis direction thereof. Further, the shade 30 attached to the windup shaft 22 enters the state of being pulled toward the housing side in the drawing/housing direction in the region between the state of being housed and the state of being drawn most. In this state, the drawing-side edge 32 of the shade 30 is approximately parallel to the longitudinal direction of the windup device 20 (see FIG. 1 or FIG. 2).

The stay 40 is attached to the drawing-side edge 32 (the other edge opposed to the one edge attached to the windup device 20) of the shade 30, and the pair of runners 50 are respectively connected to both ends of the stay 40 via the first connecting parts C1 (see FIG. 3).

The stay 40 includes a support member 42 attached to the drawing-side edge 32 of the shade 30, and a pair of slide members 44 each having one end supported by the support member 42 so as to move along the longitudinal direction thereof and the other end connected to each runner 50 via the first connecting part C1 so as to rotate relative thereto (see FIG. 4).

In this case, the support member 42 is formed into an elongated hollow rod, which is provided with an insertion hole part 43 having an approximately rectangular solid shape in cross section. This support member 42 is set to have approximately the same dimension as the width dimension of the drawing-side part 32 of the shade 30 and is attached over the whole drawing-side part 32 in the width direction. In this case, the support member 42 is approximately parallel to the longitudinal direction of the windup device 20 (see FIG. 1 or FIG. 2).

The slide member 44 is made of a material such as a resin, has, on one end side thereof, a slide part 46 formed into an elongated rod of an approximately rectangular solid having a cross section smaller (in this case, slightly smaller) than that of the insertion hole part 43 of the support member 42, and has a slide-member-side connecting end 48, which is described below, on the other end side thereof.

The slide part 46 of each slide member 44 is inserted into the insertion hole part 43 from both end sides of the support member 42, and accordingly the slide member 44 is supported so as to move relative to the support member 42 along the longitudinal direction thereof (see FIG. 4). That is, the slide-member-side connecting end 48 is capable of changing its position in the width direction relative to the support member 42, with the result that the width dimension for installing the entire stay 40 is changeable.

Note that the configuration in which the support member 42 supports the slide members 44 is not limited to the above, and it suffices that the slide members 44 are supported so as to move relative to the support member 42 in the longitudinal direction thereof. For example, a groove and a projection that can be fitted with each other may be formed along the longitudinal direction thereof in the slide member and the support member, and the slide member may be configured to be supported so as to move relative to the support member along the longitudinal direction thereof in the state in which the groove and the projection are fitted with each other.

The pair of runners 50 each have a runner-side connecting end 58 on one end side thereof, which can be connected to the slide member 44 (in this case, slide-member-side connecting part 48), and have a moving part 54 movably supported by the guide rail 60 on the other end side thereof.

In this case, the runner 50 and the slide member 44 are maintained so as to rotate relative to each other as a result of the runner-side connecting end 58 and the slide-member-side connecting end 48 being connected to each other. More specifically, first connecting holes 58h and 48h are formed in the runner-side connecting end 58 and the slide-member-side connecting part 48, respectively. Then, the runner-side connecting end 58 and the slide-member-side connecting end 48 are connected to each other in the state in which a connecting member having a cylindrical insertion part is inserted through the first connecting holes 58h and 48h.

That is, in the state in which the runner-side connecting end 58 and the slide-member-side connecting end 48 are overlapped such that the centers of the first connecting holes 58h and 48h approximately coincide with each other, the runner 50 and the slide member 44 are connected so as to rotate relative to each other about a central axis of the connecting member inserted through the first connecting holes 58h and 48h. It suffices that the runner 50 and the slide member 44 are connected to each other by a connecting member without rattling in a direction in which those are overlapped each other. The connecting part between the thus connected runner 50 and slide member 44 is the first connecting part C1.

In other words, this first connecting part C1 connects the stay 40 and each runner 50 so as to rotate relative to each other such that each guide rail 60, which is described below, can be folded in the direction in which the guide rail 60 approaches the windup device 20. In this case, the first connecting part C1 connects each runner 50 and each slide member 44 so as to rotate relative to each other on the flat plane that is approximately identical to the flat plane on which the stay 40 moves when the shade 30 is drawn and housed. The folding of the pair of guide rails 60 via the first connecting parts C1 is described below in detail.

Formed in the moving part 54 of the runner 50 is an engagement recess 55, in which the wire 86 for moving the runner 50, which is described below, and an interlocking member 87 attached thereto can be engaged. More specifically, the wire 86 and the interlocking member 87 can be engaged in the engagement recess 55 such that the wire 86 extending from the interlocking member 87 toward both sides extends along the moving direction of the runner 50.

The pair of guide rails 60 respectively support the pair of runners 50 connected to both ends of the stay 40 such that the shade 30 can be guided in the drawing/housing direction thereof. Description is now given, where a proximal end 60a of the guide rail 60 denotes the end of the guide rail 60 on the side on which the pair of runners 50 are located when the shade 30 is housed and a tip 60b of the guide rail 60 denotes the end of the guide rail 60 on the side on which the pair of runners 50 are located when the shade 30 is drawn most.

The pair of guide rails 60 are each formed by, for example, bending and welding an elongate plate-like metal member. In this case, an aluminum material is used as the material for the guide rail 60.

Each guide rail 60 has a guide groove part 62 for supporting the moving part 54 of the runner 50 so as to move each runner 50 along the longitudinal direction thereof. The guide groove part 62 is formed in a groove shape larger (in this case, slightly larger) than the moving part 54 of the runner 50 in the cross section perpendicular to the longitudinal direction thereof (see FIG. 5). An opening for projecting the runner-side connecting end 58 of the runner 50 is formed along the longitudinal direction in the guide groove part 62.

The guide groove part 62 movably supports the moving part 54 in the state in which the portion of the runner 50 on the runner-side connecting end 58 side projects outwardly from the opening thereof. Further, this guide groove part 62 is formed to have a narrower width in the opening side than the interior side such that the moving part 54 is prevented from slipping away from the opening. Moreover, the guide groove part 62 has an interlocking piece 63 extended in a projecting manner from the interior wall in the vicinity of the opening toward the inner side thereof, along the longitudinal direction of the guide rail 60 (see FIG. 5).

Formed in the runner 50 is a groove-like interlocking groove part 56 capable of interlocking with the interlocking piece 63. This interlocking groove part 56 extends along the longitudinal direction of the guide rail 60 in the state in which the moving part 54 is disposed in the guide groove part 62, and is formed into a groove shape larger (in this case, slightly larger) than the interlocking piece 63 in the flat plane direction perpendicular to the longitudinal direction (see FIG. 5).

As a result of the moving part 54 being disposed in the guide groove part 62, the runner 50 is supported relative to the guide rail 60 without rattling in the direction other than the longitudinal direction thereof. Needless to say, it suffices that the runner 50 is movably supported relative to the guide rail 60 in the longitudinal direction thereof, and clearance may be provided in the direction perpendicular to the longitudinal direction. Alternatively, the runner 50 may be movably supported in the direction in which the opening and the interior side of the guide groove part 62 are linked so as to change the amount for which the portion thereof on the runner-side connecting part 58 projects from the guide rail 60.

The guide rail 60 includes a proximal-end-side regulating part 72 in the proximal end 60a thereof. In this case, the proximal-end-side regulating part 72 has a proximal-end fitting part 72a formed to have a cross section of an approximately the same size as that of the guide groove part 62, and is disposed with the proximal-end fitting part 72a being fitted in the guide groove part 62 at the proximal end 60a of the guide rail (see FIG. 6). Further, formed in the proximal-end-side regulating part 72 is a wire insertion groove part 72b to which the wire 86 described below can be inserted (see FIG. 3 or FIG. 6). Each guide rail 60 includes a tip-side regulating part (not shown) in the tip 60b thereof. This tip-side regulating part is similar to the proximal-end-side regulating part 72, and the pair of guide rails 60 are configured so as to move the runner 50 between the proximal-end-side regulating part 72 and the tip-side regulating part.

Needless to say, the proximal-end-side regulating part 72 and the tip-side regulating part are not limited to the above-mentioned configuration, which are only required to perform regulation such that the runner 50 moves between the position at which the shade 30 is housed and the position at which the shade 30 is drawn most. For example, the proximal-end-side regulating part 72 and the tip-side regulating part may fasten an interior member provided within the guide groove part 62 by screwing or the like.

Further, formed in each of the pair of guide rails 60 are a wire disposing groove part 66 that can be disposed along the guide rail 60 at a position at which the wire 86 described below faces outwardly, and a holding groove part 67 in which a holding part 94 of the holding member 90 for holding the guide rails 60 in a folded manner can be disposed.

The wire disposing groove part 66 and the holding groove part 67 are formed along the longitudinal direction of the guide rail 60 on both sides of the guide groove part 62, with the guide groove part 62 being sandwiched therebetween. The wire disposing groove part 66 and the holding groove part 67 are open toward the directions in which those are apart from each other. The wire disposing groove part 66 is formed into a groove shape having a cross section larger (in this case, slightly larger) than that of a wire tube 89 for protecting the wire 86 described below. The holding groove part 67 is formed into a groove shape larger than the holding part 94 of the holding member 90 (see FIG. 5 or FIG. 6)._ The relationship between the wire disposing groove part 66 and the wire 86 and the relationship between the holding groove part 67 and the holding member 90 are described below in detail.

The pair of guide rails 60 are connected to the windup device 20 via the second connecting parts C2 so as to rotate relative thereto. Each of the pair of guide rails 60 has a guide-rail-side connecting piece 68 that can be connected to the windup device 20. The pair of guide rails 60 and the windup device 20 are maintained so as to rotate relative to each other as a result of the guide-rail-side connecting piece 68 and the windup-support-member-side connecting piece 28 being connected to each other. More specifically, second connecting hole parts 68h and 28h are formed in the guide-rail-side connecting piece 68 and the windup-support-member-side connecting piece 28, respectively. The guide-rail-side connecting piece 68 and the windup-support-member-side connecting piece 28 are connected to each other in the state in which a connecting member having a cylindrical insertion part is inserted through the second connecting hole parts 68h and 28h.

That is, the pair of guide rails 60 and the windup device 20 are connected so as to rotate relative to each other about the central axis of the connecting member by insertion of the connecting member in the state in which the guide-rail-side connecting piece 68 and the windup-support-member-side connecting piece 28 are overlapped each other such that the second connecting hole parts 68h and 28h approximately coincide with each other. It suffices that each guide rail 60 and the windup device 20 are connected to each other by the connecting member in an overlapping direction without rattling. The connecting parts between the pair of guide rails 60 and the windup device 20 connected in this manner are the second connecting parts C2 (see FIG. 7).

In the state in which the shade 30 is housed in the windup device 20, the second connecting parts C2 connect the pair of guide rails 60 and the windup device 20 at the positions where the rotation axis of the first connecting part C1 and the rotation axis of the second connecting part C2 approximately coincide with each other. That is, the pair of guide rails 60 and the windup device 20 are connected to each other via the second connecting parts C2 at the positions at which the rotation axis of the second connecting part C2 approximately coincides with the rotation axis of the first connecting part C1 in the state in which the pair of runners 50 both abut against the proximal-end-side regulating part 72 (see FIG. 3).

In the state in which at least the pair of guide rails 60 are extended, the second connecting parts C2 connect the windup device 20 and the pair of guide rails 60 so that the positions of the respective guide rails 60 with respect to the windup device 20 can be adjusted in the width direction of the windup device 20. That is, the second connecting parts C2 connect those so that the distance between the pair of guide rails 60, that is, the width dimension for attaching the shade device 10 is adjustable in attaching the shade device 10 to the vehicle.

In this case, the second connecting hole 68h of the guide-rail-side connecting piece 68 of the guide rail 60 is formed into an approximately wide oval shape in the longitudinal direction of the windup device 20 when the guide rails 60 are extended (when being attached to the vehicle). It suffices that the position of the guide-rail-side connecting piece 68 with respect to the windup-support-member-side connecting piece 28 is changed within the range of the second connecting hole part 68h, to thereby connect the guide-rail-side connecting piece 68 and the windup-support-member-side connecting piece 28 by the connecting member. Needless to say, the second connecting hole part 28h of the windup-support-member-side connecting piece 28 of the windup device 20 may be formed approximately into an oval shape.

As to the relationship between the stay 40 and the pair of runners 50, in a case where the distance between the pair of guide rails 60 is adjusted when those are extended, the slide members 44 follow the runners 50 that have moved in the width direction of the windup device 20 together with the guide rails 60, and accordingly the longitudinal dimension of the stay 40 changes as well. This enables the operation for smoothly drawing and housing the shade 30 even in a case where the distance between the pair of guide rails 60 is adjusted. In the state in which the distance between the pair of guide rails 60 is adjusted, the rotation axis of the first connecting part C1 and the rotation axis of the second connecting part C2 deviate from the position of the same rotation axis in some cases. However, the advantage of the same axis resides in, for example, the operability in rotation when the pair of guide rails 60 are extended and folded, and thus the mode after the shade device 10 is attached to a vehicle may be different.

In this case, the guide-rail-side connecting piece 68 and the windup-support-member-side connecting piece 28 are respectively formed of members different from those of the guide rail 60 and the windup device 20, and are fastened to the pair of guide rails 60 and the windup support member 24 by screwing or the like.

The guide-rail-side connecting piece 68 and the windup-support-member-side connecting piece 28 are formed by, for example, punching and bending a plate-like metal member. In this case, steel materials are used as the materials for the guide-rail-side connecting piece 68 and the windup-support-member-side connecting piece 28.

The shade device 10 includes a stopper part 29 capable of regulating the rotation of the pair of guide rails 60 in the extending direction in the state in which the pair of guide rails 60 are extended. Here, the stopper part 29 is formed in the windup-support-member-side connecting piece 28 of the windup device 20. More specifically, the stopper part 29 is formed by bending a part of the windup-support-member-side connecting piece 28 formed of a metal plate-like member so as to project toward the guide-rail-side connecting piece 68 in the state in which the windup-support-member-side connecting piece 28 and the guide-rail-side connecting piece 68 are connected in an overlapping manner. That is, the stopper part 29 is formed so as to abut against a part of the side edge of the guide-rail-side connecting piece 68 rotatively moving in the extending direction of the guide rails 60 when the guide rails 60 are extended. The stopper part 29 is located at, for example, the position at which the stopper part 20 abuts against the side edge of the guide-rail-side connecting piece 68 on the side closer to the windup device 20 with respect to the second connecting part 68h as well as on the center side in the width direction of the windup device 20 when the guide rails 60 are extended (see FIG. 3 or FIG. 7).

Here, the positions for regulating the rotation of the pair of guide rails 60 in the extending direction are desirably the positions corresponding to the window shape of a vehicle to which the shade device 10 is attached. For example, those are the positions in the side edges of the window, at which the pair of guide rails 60 are disposed along the side edges located at both ends of the side edge at which the windup device 20 is disposed.

Needless to say, the stopper part 29 is not limited to the above-mentioned mode and, for example, may be configured so as to abut against the outer portion of the guide rails 60 when the guide rails 60 are extended.

Further, the shade device 10 includes the holding members 90 capable of holding the pair of guide rails 60 in a folded manner. The holding members 90 are respectively attached to two holding pieces 26 extending from the both end-side portions of the windup support member 24 toward the side closer to the upper portion in the drawing direction of the shade 30. Here, the holding members 90 are configured to be attached/detached to/from the holding pieces 26, and are capable of holding the pair of guide rails 60 in the folded manner in the state of being attached to the holding pieces 26. More specifically, the holding member 90 is shaped approximately into an L shape with a plastic material such as a resin, which has, on one end side, an attachment part 92 that can be attached to the holding piece 26 of the windup device 20 and, on the other end side, the holding part 94 capable of holding the guide rail 60 (see FIG. 7).

The attachment part 92 is configured so as to be attached to the holding piece 26 extending in the drawing direction of the shade 30 from the windup support member 24 with the holding piece 26 being sandwiched therein. More specifically, the attachment part 92 is formed approximately into a U shape in cross section, and the spacing between two opposing tips is set to be narrower compared with the proximal part side. The holding piece 26 is inserted between two opposing tips of the attachment part 92 in the state in which those are elastically deformed so as to increase the spacing therebetween, and then those opposing two pieces are elastically returned, with the result that the holding member 90 is attached in such a manner that the holding piece 26 is sandwiched by the elastic return force of the attachment part 92.

The holding member 94 is formed such that the tip-side portion thereof can be housed in the holding groove part 67 of the guide rail 60. That is, the holding part 94 is formed to have a size and a shape so as to be inserted into the holding groove part 67 of the folded guide rail 60 in the state in which the attachment part 92 is attached to the holding piece 26. In this case, the holding part 94 has an approximately triangular shape in cross section, and is formed such that a portion on the tip side thereof is tilted toward the tip side of the attachment part 92 from the tip side to the proximal end side. As to this shape, for transportation in a compact manner, the drive device 80 described below is provided in the middle portion in the longitudinal direction of the windup device 20 and on the side closer to the drawing side of the shade 30 than the windup device 20 in the shade device 10 according to the present embodiment, where it is considered that the guide rails 60 are held at the positions at which those do not interfere with the drive device 80. That is, it suffices that the holding members 90 are formed so as to hold the pair of guide rails 60 in a folded manner in a mode suitable for transportation of the shade device 10.

Then, the attachment part 92 of the holding member 90 is attached to each of the holding pieces 26, and each of the pair of guide rails 60 is supported by the holding part 94, with the result that the shade device 10 is held in the state in which the tips 60b of the respective guide rails 60 face each other. In this case, when the shade device 10 is transported, each guide rail 60 is held in a position to be tilted with respect to the longitudinal direction of the windup device 20, so as to avoid the drive device 80 from the relationship between the position of the drive device 80 and the position thereof (see FIG. 7).

Alternatively, the shade device 10 may be configured such that the rotation of the pair of guide rails 60 is regulated to prevent those from being extended and folded by their own weights. That is, the rotation of the pair of guide rails 60 may be regulated so as not to be extended and folded in the state in which any force is externally applied and to be extended and folded when the operational force for extending and folding is applied by, for example, an operator. Examples of the configuration described above include the configuration in which, for example, the second connecting part C2 connects the guide-rail-side connecting piece 68 and the windup-support-member-side connecting piece 28 with an elastic member such as an O ring being sandwiched therebetween, and the rotation of the guide rails 60 is regulated by the sliding friction therebetween. Alternatively, a plurality of irregularities may be formed radially on the surfaces on which the guide-rail-side connecting piece 68 faces the windup-support-member-side connecting piece 28, and the irregularities may mesh with each other at predetermined angles to regulate the rotation of the guide rails 60.

The shade device 10 further includes the wire 86 that is disposed along the respective guide rails 60 and is connected to the respective runners 50, and the drive device 80 that moves the wire 86 along the longitudinal direction of the pair of guide rails 60.

The interlocking members 87 for the connection with the runners 50 are attached to the wire 86. The interlocking member 87 is formed approximately into a cylindrical shape having a diameter larger than the diameter of the wire 86, and is attached to the wire 86 such that the central axis thereof approximately coincides with the central axis of the wire 86. The interlocking member 87 is engaged in the engagement recess 55 formed in the moving part 54 of the runner 50, whereby the wire 86 is connected to the runner 50 (see FIG. 3 or FIG. 5). As a result, the runner 50 moves within the guide rail 60 in accordance with the movement of the wire 86.

In this case, the wire 86 is annularly formed, and one wire 86 is disposed so as to circularly move with respect to the drive device 80 and is disposed along the pair of guide rails 60. This wire 86 is disposed so as to simultaneously move the pair of connected runners 50 in one direction of drawing and housing directions of the shade 30. More specifically, the wire 86 is drawn from the drive device 80, the portion thereof connected to one of the runners 50 is disposed from the proximal end side toward the tip side in the guide groove part 62 of one of the guide rails 60, and the wire 86 is then folded back at the tip side to be disposed outside of the guide rail 60 from the tip side toward the proximal end side. Further, the wire 86 that has returned to the proximal end 60a of one of the guide rails 60 is disposed toward the proximal end 60a of the other guide rail 60. Then, the portion of the wire 86, which is connected to the other runner 50, is disposed from the proximal end side toward the tip side in the guide groove part 62 of the other guide rail 60, and the wire 86 is folded back at the tip side thereof and is disposed outside of the guide rail 60 from the tip side toward the proximal end side, to thereby return to the drive device 80 (see FIG. 8).

In the proximal end 60a of each guide rail 60, the wire 86 disposed as described above passes through the wire insertion groove part 72b of the proximal-end-side regulating part 72 and then extends outwardly on the proximal end side from the guide groove part 62.

The wire 86 is guided by a guiding pulley 88 at the position on the tip side of each guide rail 60 and is folded back toward the proximal end side of the guide rail 60. The guiding pulley 88 is supported by a pulley support member (not shown), and is rotatably supported with respect to each guide rail 60 in a position in which the wire 86 can be folded back such that the wire 86 is disposed in the guide groove part 62 of the guide rail 60 and outside thereof. In this case, the pulley support member is integrally formed with the proximal-end-side regulating part of the guide rail 60. Then, in the tip 60b of each guide rail 60, the wire 86 passes through the wire insertion groove part 72b of the tip-side regulating part and extends from the guide groove part 62 toward the guiding pulley 88 side.

Further, the portions of the wire 86 that are disposed outside of the respective guide rails 60 and the portion thereof that is disposed between the proximal ends 60a of the respective guide rails 60 are disposed to pass through the wire tube 89 formed into a hollow shape with a flexible member. That is, the wire tube 89 is disposed in the wire disposing groove parts 66 of the respective guide rails and between the respective proximal ends 60a of the pair of guide rails 60.

The drive device 80 is configured so as to move the wire 86 that is annularly formed and is disposed in both of the circulation directions thereof. In this case, in the state in which tension is applied to the wire 86, the drive device 80 causes a motor (not shown) to rotatively drive a drive pulley 82, whereby the wire 86 is moved through. That is, the drive device 80 is configured so as to move the wire 86 in both circulation directions by normal rotation and reverse rotation of the motor.

The drive device 80 may be configured such that the motor is automatically stopped when the pair of runners 50 abut against the proximal-end-side regulating parts 72 or the proximal-end-side regulating parts. For example, the configuration that can be adopted as the above-mentioned one is the configuration in which the motor is stopped when each runner 50 abuts against each proximal-end-side regulating part 72 or each proximal-end-side regulating part and the drive device 80 is applied with a load equal to or larger than a reference. Alternatively, the configuration may be such that a switch capable of stopping the motor through a pressing operation is provided at the position so as to be pressed by the runner 50 when each runner 50 abuts against each proximal-end-side regulating part 72 or each proximal-end-side regulating part.

In this case, as shown in FIG. 1 or FIG. 2, the drive device 80 is disposed at the position on the rear side of the windup device 20 (on the outer side of the wheel of the windup device 20 when the shade device 10 is attached to the vehicle) and also at the position in the middle of the longitudinal direction of the windup device 20. For example, the drive device 80 may be attached directly or indirectly to the windup support member 24. In the shade device 10 in which the drive device 80 is disposed at the above-mentioned position, the wire 86 may be disposed with sufficient length to such an extent that the respective guide rails 60 are not tightened when being folded (see FIG. 2).

Needless to say, the configuration for moving the wire 86 by the drive device 80 is not limited to the above, and it suffices that the pair of runners 50 are moved along the pair of guide rails 60. For example, the drive device may be configured to wind up respective ends of a wire.

Still alternatively, the shade device 10 may have a switch 84 capable of switching normal rotation, reverse rotation and stop of the motor of the drive device 80. The switch 84 may be disposed at the position at which a vehicle user is allowed an operation thereof when the shade device 10 is attached to the vehicle.

### <2. As to operation of shade device>

The operation of the shade device 10 is described below.

When being transported, the shade device 10 is transported in the state in which the pair of guide rails 60 are folded so as to close to the windup device 20 (see FIG. 2). That is, in the state in which the shade 30 is housed, the pair of guide rails 60 are each folded about the rotation axes of the first connecting part C1 and the second connecting part C2 that are approximately coincide with each other. Then, the holding member 90 is attached to each holding piece 26, and the holding member 90 holds each guide rail 60, to thereby maintain the folded state of each guide rail 60 (see FIG. 7).

Then, in the state in which the pair of guide rails 60 are folded, the shade device 10 is, for example, packed and transported to a workplace for attachment to a vehicle or the like,

When being attached to a vehicle, first, holding of each guide rail 60 by the holding member 90 is released and, at the same time, the holding member 90 is detached from the holding piece 26. Then, the windup device 20 is disposed along one side edge of the vehicle window and, at the same time, the pair of guide rails 60 are extended. The guide rails 60 are extended in such a manner that the respective guide rails 60 are disposed along the side edges on both sides of the above-mentioned side edge of the window. Needless to say, when the pair of guide rails 60 are extended up to the positions at which the shade device 10 is attached to a vehicle, the stopper 29 abuts against the side edge of the guide-rail-side connecting piece 68. This regulates the movement of the pair of guide rails 60 in the extending direction, and the pair of guide rails 60 are not moved so as to be extended from that position. Further, in the case where the spacing between the pair of guide rails 60 is narrower or wider with respect to the position of attachment to a vehicle when the pair of guide rails 60 are extended, it suffices that each guide rail 60 is moved with respect to the windup device 20 along the longitudinal direction of the second connecting hole part 68h of the guide-rail-side connecting piece 68, to thereby being disposed at a desired position.

In the state in which the shade device 10 is attached to a vehicle, the shade 30 is moved to an appropriate position through the operation of the switch 84 for use.

That is, when the shade 30 is drawn, the drive device 80 moves the wire 86 when a drawing operation is performed on the switch 84, and the pair of runners 50 attached to the wire 86 are simultaneously moved along the respective guide rails 60 toward the side to which the shade 30 is drawn. This moves the stay 40 connected to the pair of runners 50 in a drawing direction, and the shade 30 attached to the stay 40 is drawn. When a stop operation is performed on the switch 84 in the middle portion of the guide rail 60, the movement of the wire 86 is stopped, and the shade 30 is maintained at the position at which it has been drawn before the stop operation. Further, when the shade 30 is drawn to the position at which it can be drawn most, operation for drawing the shade 30 is stopped at that position.

As a result of a housing operation being performed on the switch 84 when the shade 30 is housed, the drive device 80 moves the wire 86 in the direction opposite to that when the shade 30 is drawn, and the pair of runners 50 are simultaneously moved toward the side on which the shade 30 is housed along the respective guide rails 60. As a result, the shade 30 is moved in the housing direction. When the stop operation is performed by the switch 84 in the middle portion of the guide rail 60, the shade 30 is maintained at the position at which it has been drawn before the stop operation, in a similar manner as described above. When the shade 30 is housed up to the housing position, housing operation of the shade 30 is stopped at that position.

According to the shade device 10 of the present embodiment, the stay 40 and the pair of runners 50 are connected to each other so as to rotate relative to each other, and thus it is possible to extend or fold the guide rails 60 in the state in which the runners 50 are movably supported by the guide rails 60. Further, one runner 50 can be supported by one guide rail 60, which allows the runners 50 to smoothly move. Further, a package size can be made small by folding the guide rails 60. That is, the shade 30 can be smoothly drawn and housed and can be transported in a compact manner.

In the shade device 10, the windup device 20 and the pair of guide rails 60 are directly connected to each other between the windup-support-member-side connecting piece 28 and the guide-rail-side connecting piece 68, whereby it is possible to reduce the loads applied to the first connecting parts C1 when the shade device 10 is transported or the guide rails 60 are folded or extended. Further, the rotation axis of the first connecting part C1 and the rotation axis of the second connecting part C2 are made to approximately coincide with each other, whereby the guide rails can be folded smoothly. Moreover, the pair of guide rails 60 are extended and folded about the rotation axes of the second connecting parts C2 approximately at fixed positions with respect to the windup device 20, and thus the extending and folding operations can be performed stably. Accordingly, the modes of the shade device 10 can be made approximately the same when the pair of guide rails 60 are folded, which allows the shade device 10 to be easily handled and easily packed. In addition, the modes of the shade device 10 can be made approximately the same when the pair of guide rails 60 are extended, which allows the shade device 10 to be easily handled when being attached to a vehicle and improves the accuracy in attachment to a vehicle.

The assembly width dimension in the state in which the pair of guide rails 60 are extended is adjustable when the shade device 10 is attached to a vehicle, whereby it is possible to accommodate a dimensional error per product or dimensional error of an attachment position.

In a case where the distance between the pair of guide rails 60 varies in the longitudinal direction of the guide rails 60, or even in a case where the distance between the pair of guide rails 60 varies when or after the shade device 10 is attached to a vehicle, it is possible to smoothly draw or house the shade 30 correspondingly to the change in distance. Even when the pair of guide rails 60 are folded in the state in which the rotation axis of the first connecting part C1 and the rotation axis of the second connecting part C2 do not coincide with each other, the slide members 44 slide with respect to the support member 42 in accordance with the rotation of the pair of guide rails 60. This enables to fold the guide rails 60 and reduce the loads applied to the stay 40 and the runners 50.

Further, it is possible to prevent the guide rails 60 from being excessively extended in the attachment to a vehicle, which limits damages to the slide members 44 and the runners 50. In addition, scratches or damages to a vehicle can be limited due to the guide rails 60 coming into contact with the vehicle.

The holding member 90 is capable of holding the pair of guide rails 60 in a folded manner, whereby it is possible to prevent the guide rails 60 from rattling, which limits damages to the shade device 10 when the shade device 10 is transported.

The runners 50 can be moved and stopped at appropriate positions through the wire 86 that is automatically moved by the drive device 80, whereby it is possible to automatically move the shade 30 to a desired position for use. The shade device 10 is configured such that one runner 50 is movably supported by one guide rail 60 and can move smoothly, whereby it is possible to prevent the application of an excessive load to the drive device 80 and prevent deterioration of durability of the drive device 80.

### {Modifications}

Modifications of the shade device 10 according to the above-mentioned embodiment are described. In the description of the modifications, a difference from the above-mentioned embodiment is mainly described, where similar components to those of the above-mentioned embodiment are denoted by the same symbols and description thereof is omitted.

In shade devices 100 and 200 according to the modifications, the distance between the windup device 20 and the rotation axis of one of the first connecting parts C1 is set to be different from the distance between the windup device 20 and the other of the first connecting parts C1 in the direction in which the shades 30 and 230 are drawn and housed. The shade devices 100 and 200 according to two modifications are described below.

### <1. First Modification>

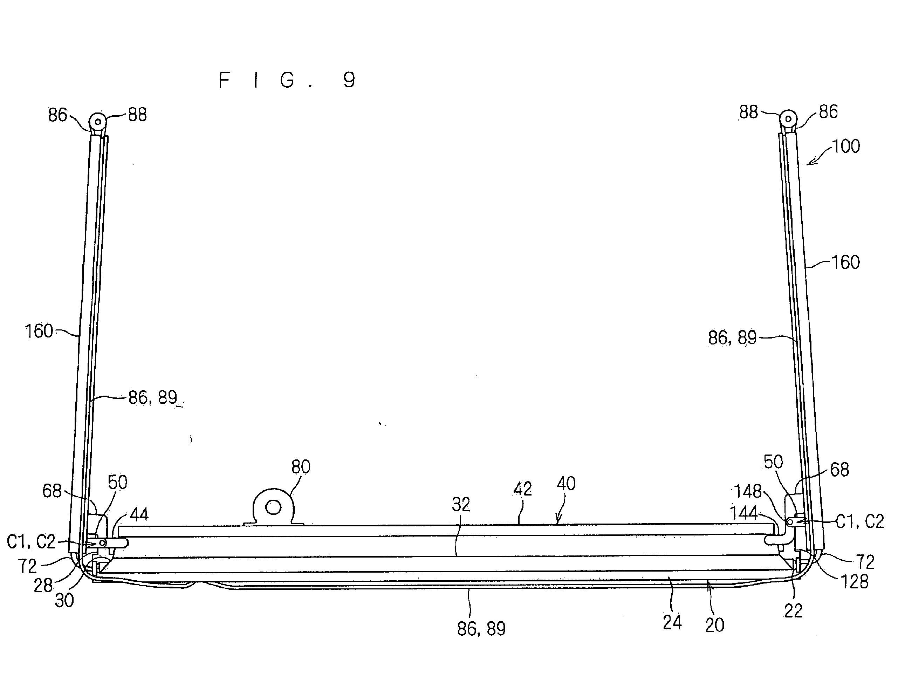

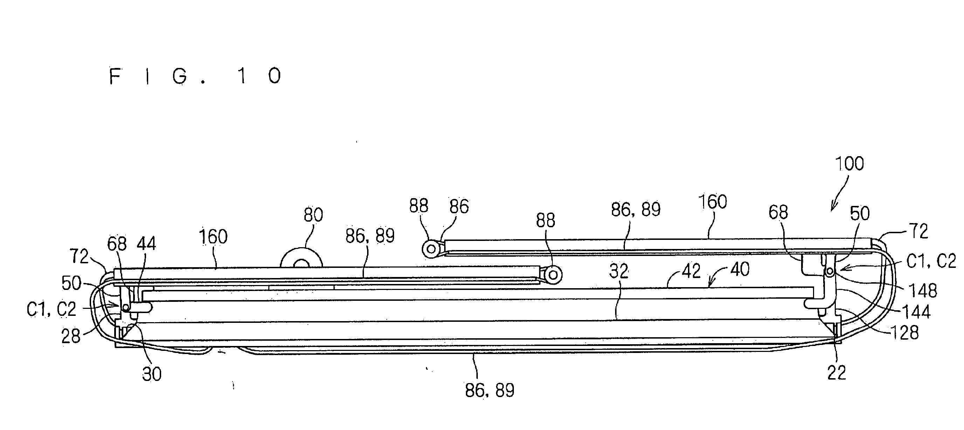

First, the first modification is described. FIG. 9 is a view showing the shade device 100 when guide rails 160 are extended according to the first modification, and FIG. 10 is a view showing the shade device 100 when the guide rails 160 are folded according to the first modification.

The shade device 100 according to the first modification includes a pair of guide rails 160 having a longer length in longitudinal direction than an approximately half length of the windup device 20, which makes the mode of the pair of guide rails 160 compact when being folded.

In this shade device 100, the stay 40 includes a pair of slide members 144 and 44 having different shapes. In the pair of slide members 144 and 44, the position of the rotation axis of one of the first connecting parts C1 to which one of the slide members 144 and one of the runners 50 are connected is different from the position of the rotation axis of the other of the first connecting parts C1 in the drawing direction of the shade 30. That is, the position of the rotation axis with respect to the windup device 20 in the drawing direction of the shade 30 varies depending on the first connecting part C1. Here, in its entirety, one slide member 144 is formed approximately into an L-shape, where one-end-side portion thereof is movably supported by the support member 42, while the other-end-side portion thereof is bent approximately perpendicular toward the side closer to the upper portion in the drawing direction of the shade 30. Then, one slide member 144 has a slide-member-side connecting end 148 on the other end side that is bent, and is connected to one runner 50 via the first connecting part C1 at this slide-member-side connecting part 148. That is, the rotation axis of one of the first connecting parts C1 is positioned on the side closer to the upper portion in the drawing direction than the rotation axis of the other of the first connecting parts C1.

The other shape of this one slide member 144 and the connection to the runner 50 are similar to those of the above-mentioned embodiment, and thus description thereof is omitted.

In the shade device 100, also as to the respective second connecting parts C2, the position of the rotation axis with respect to the windup device 20 in the drawing direction of the shade 30 varies. More specifically, both second connecting parts C2 connect the pair of guide rails 160 and the windup device 20 at the positions at which the rotation axis of the first connecting part C1 approximately coincides with the rotation axis of the second connecting part C2 in the state in which the shade 30 is housed as in the above-mentioned embodiment. That is, the rotation axis of the first connecting part C1 by which the one of the slide members 144 and one of the runners 50 are connected to each other approximately coincides with the rotation axis of the second connecting part C2, and accordingly in the state in which the shade 30 is housed, the rotation axis of the second connecting part C2 is positioned on the side closer to the upper portion in the drawing direction than the rotation axis of the other of the second connecting parts C2.

In this case, one windup-support-member-side connecting piece 128 of the windup device 20 is formed to be longer than the other windup-support-member-side connecting piece 28 in the drawing direction of the shade 30. That is, the windup-support-member-side connecting piece 128 has a second connecting hole 128h on the side closer to the upper portion in the drawing direction of the shade 30 than the second connecting hole 28h of the windup-support-member-side connecting piece 28, and is connected to the guide-rail-side connecting piece 68 at that position. The shape of the windup-support-member-side connecting piece 128 and the connection with the guide-rail-side connecting piece 68 are similar to those of the above-mentioned embodiment, and thus description thereof is omitted.

With the above-mentioned configuration, the pair of guide rails 160 are each rotated about the rotation axes of the first connecting part C1 and the second connecting part C2 when the pair of guide rails 160 are extended and folded. In the state in which the pair of guide rails 160 are folded, the pair of guide rails 160 are disposed in a parallel manner in the drawing direction of the shade 30 such that one guide rail 160 is positioned on the side closer to the upper portion in the drawing direction of the shade 30 than the other guide rail 160.

When the shade 30 is drawn and housed, the pair of runners 50 are moved along the pair of guide rails 160 while keeping the deviated positional relationship in the drawing/housing direction of the shade 30. The shade 30 is drawn and housed in a position such that the drawing-side edge 32 thereof is approximately parallel to the longitudinal direction of the windup device 20.

As described above, according to the shade device 100 of the first modification, the folded state of the pair of guide rails 160 can be made compact even in a case where the length thereof in the longitudinal direction is larger than an approximately half length of the windup device 20.

### <2. Second Modification>

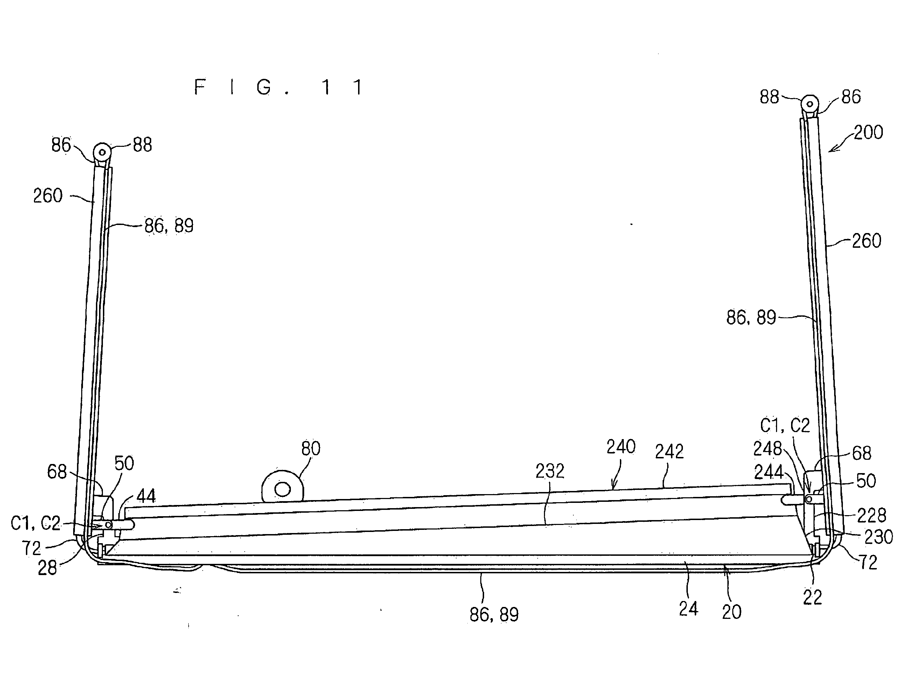

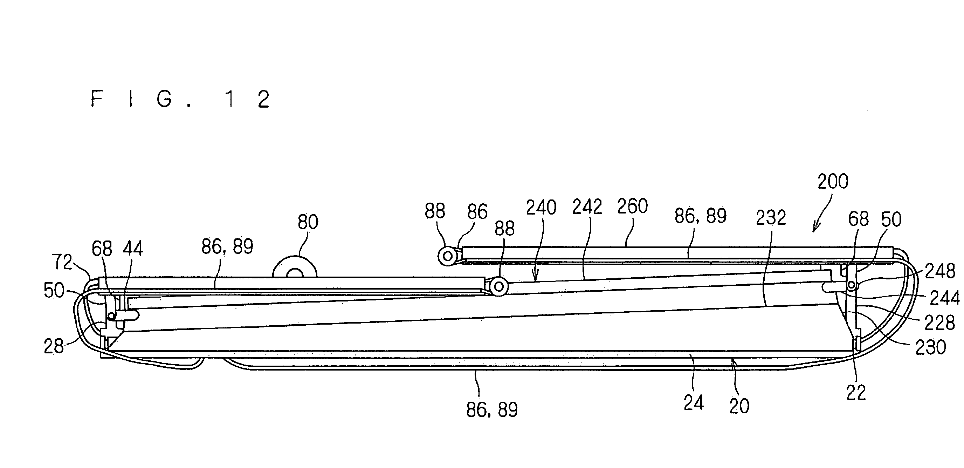

A second modification is described below. FIG. 11 is a view showing the shade device 200 when guide rails 260 are extended according to the second modification, and FIG. 12 is a view showing the shade device 200 when the guide rails 260 are folded according to the second modification.

In the shade device 200 according to the second modification, a shade 230 that is drawn from and housed in the windup device 20 has a drawing-side edge 232 that is tilted with respect to the longitudinal direction of the windup device 20 (windup support member 24). The shade device 200 serves to make the mode of a pair of guide rails 260 compact when being folded, which guide the shade 230 having the above-mentioned drawing-side edge 232 in the drawing/housing direction.

In this shade device 200, a stay 240 is attached along the drawing-side edge 232 tilted with respect to the longitudinal direction of the windup device 20. That is, the stay 240 (support member 242) is attached to the shade 230 so as to be tilted with respect to the longitudinal direction of the windup device 20. A pair of slide members 244. 44 of the stay 240 are supported so as to move along the support member 242 that is tilted with respect to the windup device 20 on both sides thereof. In the pair of slide members 244, 44 the positions of the slide-member-side connecting ends 248, 48 are different from each other in the drawing/housing direction of the shade 230. That is, the positions of the rotation axes of the respective first connecting parts C1 connecting the slide members 244, 44 and the runners 50 are different from each other in the drawing/housing direction of 230.

The other configuration of the stay 240 and the connection with the runner 50 are similar to those of the shade device 10 according to the above-mentioned embodiment, and thus description thereof is omitted.

Further, as in the above-mentioned embodiment, the respective second connecting parts C2 connect the pair of guide rails 260 to the windup device 20 at positions such that the rotation axes thereof approximately coincide with the rotation axes of the first connecting parts C1 in the state in which the shade 230 is housed. In this case, similarly to the shade device 100 according to the first modification, a windup-support-member-side connecting piece 228 of the windup device 20 has a second connecting hole 228h on the side closer to the upper portion in the drawing direction of the shade 230 than the second connecting hole 28h of the windup-support-member-side connecting piece 28, and is connected to the guide-rail-side connecting piece 68 at that position.

With the above-mentioned configuration, the respective guide rails 260 are each rotated about the rotation axis of the first connecting part C1 and second connecting part C2 when the pair of guide rails 260 are extended and folded. In the state in which the pair of guide rails 260 are folded, the pair of guide rails 260 are disposed in a parallel manner in the drawing direction of the shade 230 such that one guide rail 260 is positioned on the side closer to the upper portion in the drawing direction of the shade 230 than the other guide rail 260. Also in this state, the shade 230 is maintained in the state in which the drawing-side edge 232 is tilted with respect to the longitudinal direction of the windup device 20.

As described above, according to the shade device 200 of the second modification, even in a case of using a shade in which a drawing-side edge is tilted with respect to a windup device in accordance with a window shape, such as in a case where a shade is applied to an odd-shaped window in which opposed side edges are not parallel to each other, a pair of guide rails can be folded, which enables compact transportation.

While the shade device 10, 100, 200 has been described above in detail, the foregoing description is in all aspects illustrative, and the present invention is not limited thereto. That is, numerous modifications and variations can be devised in the described aspects without departing from the scope of the invention as defined by the appended claims.

### Description of Reference Numerals

- 10: shade device
- 20: windup device
- 29: stopper part
- 30: shade
- 32: drawing-side edge
- 40: stay
- 42: support member
- 44: slide member
- 50: runner
- 60: guide rail
- 80: drive device
- 86: wire
- 90: holding member

## Claims

1. Shade device configured to shield a window, comprising:
a windup device (20);
a shade (30) attached to said windup device (20) so as to be drawn therefrom and housed therein;
a stay (40) attached to a drawing-side edge of said shade (30);
a pair of runners (50) respectively connected to both ends of said stay (40) via first connecting parts (C1); and
a pair of guide rails (60) respectively supporting said pair of runners (50) in a movable manner,
wherein said first connecting parts (C1) connect said stay (40) and each of said runners (50) so as to rotate relative to each other such that each of said guide rails (60) is adapted to be folded in a direction to approach said windup device (20) in a state in which said shade (30) is housed in said windup device (20) and said pair of runners (50) is located at ends of said guide rails (60),
wherein said windup device (20) and each of said guide rails (60) are connected so as to rotate relative to each other via second connecting parts (C2); and wherein
a rotation axis of said first connecting part (C1) approximately coincides with a rotation axis of said second connecting part (C2) in a state in which said shade (30) is housed in said windup device (20).

2. Shade device according to Claim 1, wherein in a drawing/housing direction of said shade (30), the position of a rotation axis of one of said first connecting parts (C1) and the position of a rotation axis of the other of said first connecting parts (C1) are set to be different.

3. Shade device according to Claim 1, wherein said second connecting parts (C2) connect, in a state in which at least said pair of guide rails (60) are extended, said windup device (20) and said pair of guide rails (60) so as to adjust a position of each of said guide rails (60) with respect to said windup device (20) in a longitudinal direction of said windup device (20).

4. Shade device according to Claim 1, wherein said stay (40) includes:
a support member (42) attached to said drawing-side edge of said shade (30); and
a pair of slide members (44) each having one end supported by said support member (42) so as to move along a longitudinal direction thereof and the other end connected to each of said runners (50) via said first connecting parts (C1) so as to rotate relative thereto.

5. Shade device according to Claim 1, further comprising a stopper (29) configured to regulate the rotation of said pair of guide rails (60) in the extending direction in a state in which said pair of guide rails (60) are extended.

6. Shade device according to Claim 1, further comprising a holding member (90) configured to hold said pair of guide rails (60) in a folded manner.

7. Shade device according to Claim 1, further comprising:
a flexible linear member (86) disposed along each of said guide rails (60) and connected to each of said runners (50); and
a drive device (80) for moving said flexible linear members (86) along a longitudinal direction of said pair of guide rails (60).

## Patentansprüche

1. Schattenvorrichtung, welche eingerichtet ist, ein Fenster abzuschirmen, aufweisend:
eine Aufwickeleinrichtung (20);
eine Abschirmung (30), die so an der Aufwickeleinrichtung (20) befestigt ist, dass sie aus dieser herausgezogen und in dieser aufgenommen werden kann;
eine Strebe (40), welche an einem zugseitigen Rand der Abschirmung (30) befestigt ist;
ein Paar Läuferelemente (50), welche über erste Verbindungsteile (C1) mit den beiden jeweiligen Enden der Strebe (40) verbunden sind; und
ein Paar Führungsschienen (60), welche das Paar Läuferelemente (50) auf eine bewegliche Weise stützen,
wobei die ersten Verbindungsteile (C1) die Strebe (40) und jedes der Läuferelemente (50) so verbinden, dass sie relativ zueinander drehen können, so dass jede der Führungsschienen (60) eingerichtet ist, in eine Richtung zum Annähern der Aufwickeleinrichtung (20) in einem Zustand geklappt zu werden, bei welchem die Abschirmung (30) in der Aufwickeleinrichtung (20) aufgenommen ist und das Paar Läuferelemente (50) an Enden der Führungsschienen (60) angeordnet ist,
wobei die Aufwickeleinrichtung (20) und die jeweiligen Führungsschienen (60) so verbunden sind, dass sie relativ zueinander über zweite Verbindungsteile (C2) drehen können; und wobei
eine Drehachse des ersten Verbindungsteils (C1) annähernd mit einer Drehachse des zweiten Verbindungsteils (C2) in einem Zustand zusammenfällt, bei welchem die Abschirmung (30) von der Aufwickeleinrichtung (20) aufgenommen ist.

2. Schattenvorrichtung gemäß Anspruch 1, wobei die Position einer Drehachse des einen der ersten Verbindungsteile (C1) und die Position einer Drehachse des anderen der ersten Verbindungsteile (C1) in einer Herauszieh-/Aufnahmerichtung der Abschirmung (30) so festgelegt sind, dass diese unterschiedlich sind.

3. Schattenvorrichtung gemäß Anspruch 1, wobei die zweiten Verbindungsteile (C2) die Aufwickeleinrichtung (20) und das Paar Führungsschienen (60) in einem Zustand, bei dem zumindest das Paar Führungsschienen (60) ausgefahren ist, so verbinden, dass eine Position von jeder der Führungsschienen (60) bezüglich der Aufwickeleinrichtung (20) in einer Längsrichtung der Aufwickeleinrichtung (20) eingestellt wird.

4. Schattenvorrichtung gemäß Anspruch 1, wobei die Strebe (40) umfasst:
ein Stützelement (42), welches an dem zugseitigen Rand der Abschirmung (30) befestigt ist; und
ein Paar Gleitelemente (44), wobei jedes ein Ende aufweist, welches von dem Stützelement (42) gestützt wird, so dass es sich entlang dessen Längsrichtung bewegen kann, und wobei das andere Ende über die Verbindungsteile (C1) mit einem jeweiligen der Läuferelemente (50) verbunden ist, so dass es relativ dazu drehen kann.

5. Schattenvorrichtung gemäß Anspruch 1, welche ferner einen Anschlag (29) aufweist, welcher eingerichtet ist, die Drehung des Paars Führungsschienen (60) in der Ausfahrrichtung in einem Zustand einzustellen, bei dem das Paar Führungsschienen (60) ausgefahren ist.

6. Schattenvorrichtung gemäß Anspruch 1, welche ferner ein Halteelement (90) aufweist, welches eingerichtet ist, das Paar Führungsschienen (60) auf eine zusammengeklappte Weise zu halten.

7. Schattenvorrichtung gemäß Anspruch 1, welche ferner aufweist:
ein flexibles längliches Element (86), welches entlang der jeweiligen Führungsschiene (60) angeordnet und mit dem jeweiligen Laufelement (50) verbunden ist; und
eine Antriebseinrichtung (80) zum Bewegen der flexiblen länglichen Elemente (86) entlang einer Längsrichtung des Paars Führungsschienen (60).

## Revendications

1. Dispositif de store configuré pour protéger une fenêtre, comprenant :
un dispositif d'enroulement (20) ;
un store (30) fixé audit dispositif d'enroulement (20) afin d'être tiré à partir de celui-ci et logé à l'intérieur ;
un étai (40) fixé à un bord du côté de traction dudit store (30) ;
une paire de roues (50) respectivement raccordées aux deux extrémités dudit étai (40) via des premières parties de raccordement (C1) ; et
une paire de rails de guidage (60) supportant respectivement ladite paire de roues (50) d'une manière mobile,
dans lequel lesdites premières parties de raccordement (C1) raccordent ledit étai (40) et chacune desdites roues (50) afin de tourner les uns par rapport aux autre de sorte que chacun desdits rails de guidage (60) est adapté pour être plié dans une direction afin de s'approcher dudit dispositif d'enroulement (20) dans un état dans lequel ledit store (30) est logé dans ledit dispositif d'enroulement (20) et ladite paire de roues (50) est positionnée aux extrémités desdits rails de guidage (60),
dans lequel ledit dispositif d'enroulement (20) et chacun desdits rails de guidage (60) sont raccordés afin de tourner l'un par rapport à l'autre via des secondes parties de raccordement (C2) ; et dans lequel :
un axe de rotation de ladite première partie de raccordement (C1) coïncide approximativement avec un axe de rotation de ladite seconde partie de raccordement (C2) dans un état dans lequel ledit store (30) est logé dans ledit dispositif d'enroulement (20).

2. Dispositif de store selon la revendication 1, dans lequel, dans une direction de traction / logement dudit store (30), la position d'un axe de rotation de l'une desdites premières parties de raccordement (C1) et la position d'un axe de rotation de l'autre parmi lesdites premières parties de raccordement (C1) sont déterminées pour être différentes.

3. Dispositif de store selon la revendication 1, dans lequel lesdites secondes parties de raccordement (C2) raccordent, dans un état dans lequel au moins ladite paire de rails de guidage (60) sont étendus, ledit dispositif d'enroulement (20) et ladite paire de rails de guidage (60) afin d'ajuster une position de chacun desdits rails de guidage (60) par rapport audit dispositif d'enroulement (20) dans une direction longitudinale dudit dispositif d'enroulement (20).

4. Dispositif de store selon la revendication 1, dans lequel ledit étai (40) comprend :
un élément de support (42) fixé audit bord du côté de traction dudit store (30) ; et
une paire d'éléments de coulissement (44) ayant chacun une extrémité supportée par ledit élément de support (42) afin de se déplacer le long de sa direction longitudinale et l'autre extrémité raccordée à chacune desdites roues (50) via lesdites premières parties de raccordement (C1) afin de tourner par rapport à cette dernière.

5. Dispositif de store selon la revendication 1, comprenant en outre une butée (29) configurée pour réguler la rotation de ladite paire de rails de guidage (60) dans la direction d'extension dans un état dans lequel ladite paire de rails de guidage (60) sont étendus.

6. Dispositif de store selon la revendication 1, comprenant en outre un élément de maintien (90) configuré pour maintenir ladite paire de rails de guidage (60) d'une manière pliée.

7. Dispositif de store selon la revendication 1, comprenant en outre :
un élément linéaire flexible (86) disposé le long de chacun desdits rails de guidage (60) et raccordé à chacune desdites roues (50) ; et
un dispositif d'entraînement (80) pour déplacer lesdits éléments linéaires flexibles (86) le long d'une direction longitudinale de ladite paire de rails de guidage (60).
